# EUROPEAN PATENT SPECIFICATION

(11) **EP 3 012 474 B1**
(45) Date of publication and mention of the grant of the patent: **04.12.2019**
(21) Application number: 14306669.4
(22) Date of filing: 21.10.2014
(51) Int. Cl.: F16C 33/76, F16D 23/14

(54) **A bearing, a clutch bearing device and a motor vehicle equipped with such a clutch bearing device**
Lager, Kupplungslagervorrichtung und mit solch einer Kupplungslagervorrichtung ausgestattetes Kraftfahrzeug
Butée, dispositif de butée d'embrayage et véhicule automobile équipé d'un tel dispositif

(43) Date of publication of application: 27.04.2016
(73) Proprietor: Aktiebolaget SKF, 415 50 Göteborg (SE)
(72) Inventor: Arnault, Benoît, 37540 Saint Cyr sur Loire (FR)
(74) Representative: Kloker, Markus

(56) References cited:
- EP-A2- 2 405 153
- DE-A1-102004 034 439
- DE-A1-102010 019 531

## Description

### TECHNICAL FIELD OF THE INVENTION

The present invention relates to a bearing forming a clutching-declutching bearing for a motor vehicle. The invention also relates to a clutch bearing device including a bearing of the above-mentioned type. Finally, the invention relates to a motor vehicle equipped with such a clutch bearing device.

### BACKGROUND ART OF THE INVENTION

In the automotive industry, it is known to use a bearing comprising, with reference to a central axis, an inner ring, an outer ring and rolling elements arranged in a volume between the rings for constituting a clutching-declutching bearing making it possible to control a diaphragm spring that is part of a declutching mechanism known per se. The inner and outer rings define two openings. A first opening is a radial opening and it is placed on a side of the bearing farther from the central axis. The second opening is an axial opening which is placed in a side of the bearing nearer to the central axis. Such a bearing can be incorporated into a clutch bearing device. A priority for such a clutch bearing device is to prevent polluting air and/or liquid and/or dust from penetrating into the volume where the rolling elements are arranged. To this end, sealing elements are provided to both openings. It is known to provide the clutch bearing device with a watertight seal and an airtight seal. While the placement of a sealing element on the first opening is easily handled, it appears to be more complicated to find a solution for the sealing element of the second opening. A sealing device for the second opening can be realized as explained in FR-A-2 944 843. In that device, a circular flange is used for preventing pollution particles to enter the volume where the rolling elements are placed. The circular flange is placed on the inner ring and is provided with an external bent projection. In this way, a reduced gap is created between the outer ring and the circular flange of the inner ring. However, the gap, even if reduced, does not provide complete water-tightness and air-tightness.

In addition, it is known from FR 2 883 347 that a clutch bearing device can be equipped with a sealing lip mounted on the inner ring. A wear plate is mounted on the outer ring and in frictionally-engaging contact with a diaphragm spring. In this device, a surface of the sealing lip is in contact with the outer ring or with the wear plate. The sealing lip may be displaced by continued relative movement between the outer and inner rings and a direct path is open for pollution particles. Moreover, the sealing lip is inclined deterioration, due to repeated mechanical shocks and weather conditions. A fracture of the sealing lip might cancel the sealing effect.

Other sealing arrangements for clutch bearings are known from DE 10 2010 019 531 A1 and from EP 2 405 153 A2.

### SUMMARY OF THE INVENTION

An object of the invention is to remedy those drawbacks more particularly by proposing a novel bearing forming a clutching-declutching bearing where air- tightness and water-tightness are improved without relying on a sealing lip or an a single reduced gap.

To this end, the invention concerns a bearing forming a clutching-declutching bearing for a motor vehicle, said bearing defining a central axis and including an outer ring free to rotate around said central axis, an inner ring, rolling elements disposed between the outer and the inner rings, a wear plate mounted on the outer ring. The inner ring is equipped with a flange, comprising an external skirt and defining a first gap, which extends radially between said external skirt and the outer ring. According to the invention, the wear plate is provided with an inner radial end which extends radially, towards the central axis, beyond the outer ring and beyond the external skirt of the flange and which defines a second gap, which extends axially between said skirt and said end. The end of the wear plate is provided with an internal protrusion, and a third gap is defined radially between the internal protrusion of the wear plate and the external skirt of the flange. Furthermore, a housing for reception of a free end, the external skirt of the flange is defined between the internal protrusion of the wear plate and an edge of the outer ring.

Owing to the invention, a labyrinth path is generated between the end of the wear plate, the outer ring and the external skirt of the flange, for preventing polluting air or/and fluid or/and materials from entering in the volume between the inner ring and the outer ring. In this way, pollution particles find a difficult path for entering this volume and statistically a lower percentage of them access the bearing inner volume. Moreover, relative movements between the rings do not substantially change the labyrinth path and the flange of the wear plate support much better deterioration.

According to further aspects of the invention which are advantageous but not compulsory, such a bearing may incorporate one or several of the following features taken in any admissible configuration:
- The end of the wear plate defines an axial floor of the housing.
- The floor of the housing is provided within a groove made in the inner radial end of the wear plate.
- An external radial annular projection is arranged on the external skirt of the flange, said projection defining, radially with the wear plate, a fourth gap and, axially with the outer ring, a fifth gap.
- The inner radial end of the wear plate has a groove which forms a part of the housing and accommodates a part of the external skirt.
- The external radial annular projection is accommodated in the groove.
- The groove has a radial width greater than or equal to a radial width of the remaining part of the housing.
- The inner ring has a null or reduced angular clearance motion around an axis perpendicular to the central axis.

The invention also provides a clutch bearing device comprising a metal sleeve for reception of the control device and a bearing such as mentioned above, said bearing being capable of acting on a diaphragm spring over clutch mechanism.

Finally, the invention provides a motor vehicle equipped with a clutch bearing device such as mentioned above.

### BRIEF DESCRIPTION OF THE DRAWINGS

The present invention and its advantages will be well understood on the basis of the following description, which is given as an illustrative example, without restricting the scope of the invention and in relation with the annexed drawings. In the drawings:
- figure 1 is a schematic axial sectional view of a bearing according to the invention;

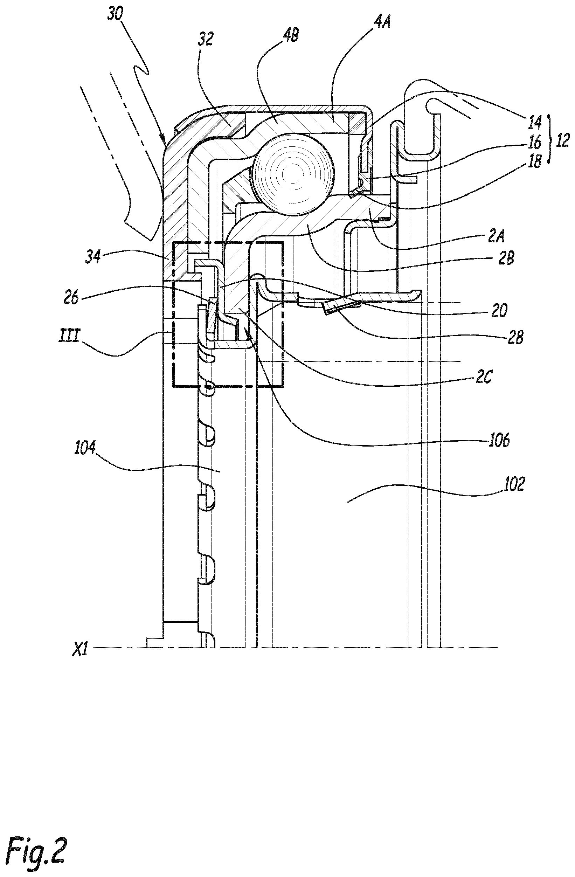

- figure 2 is a view on a larger scale of an upper portion of figure 1;
- figure 3 is a view on a larger scale of detail III on figure 2;
- figure 4 is a view similar to figure 3, for a bearing according to a second embodiment of the invention; and
- figure 5 is a view similar to figure 3, for a bearing according to a third embodiment of the invention.

### DETAILED DESCRIPTION OF SOME EMBODIMENTS

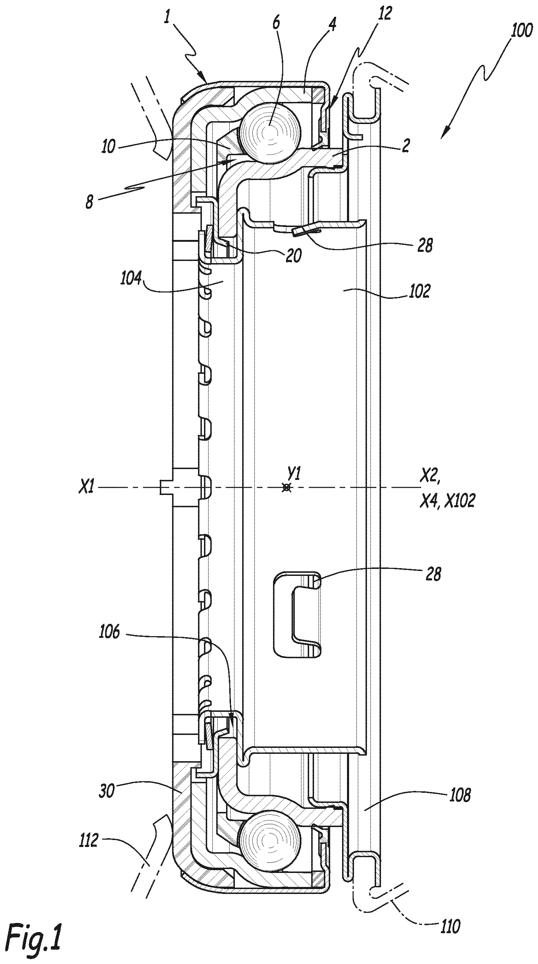

The bearing 1 shown in figure 1 is included in a clutch bearing device 100 which comprises a metal sleeve 102 for reception of a control device. In particular, the control device is a hydraulic control sub-assembly that includes a stationary support, in general mounted on the casing of a gear box (not shown). The control device also includes a piston received entirely inside an annular chamber provided in the clutch bearing device 100 and designed to receive a control hydraulic fluid fed in via a fitting. The piston is equipped with two sealing gaskets in contact respectively with a radially inner wall and with a radially outer wall of the chamber (not shown).

The bearing 1 forms a clutching-declutching bearing having its inner ring referenced 2 and its outer ring referenced 4. The inner ring 2 consists of an axial end portion 2A, a curved portion 2B and a radial end portion 2C. The outer ring 4 consists of an axial end portion 4A, a curved portion 4B and a radial end portion 4C. A series of balls 6 are held in position in a volume 8 defined between the curved portion 2B of the inner ring 2 and the curved portion 4B of the outer ring 4, by means of a cage 10. Moreover, the inner ring 2 and the outer ring 4 define a first opening 8A of the volume 8, between the axial ends 2A and 4A, and a second opening 8B of the volume 8, between the radial ends 2C and 4C.

The axes of symmetry of the rings 2 and 4 are referenced respectively X2 and X4, coinciding with each other when the bearing 1 is in the assembled configuration. Moreover, axes X2 and X4 coincide with an axis X1 which is the central axis of symmetry of the bearing 1. One considers an axis Y1, perpendicular to central axis X1 and secant with this axis. Because of their respective geometries, in particular of the shapes of portions 2B and 4B, inner ring has a null angular clearance motion around axis Y1 with respect to outer ring 4. In a variant, inner ring 2 has a reduced angular clearance motion around axis X1 with respect to outer ring 4.

In the present description and in the appended claims, the words "axial", "radial", "axially", "radially" and equivalent words are defined with respect to axis X1. A direction is axial when it is parallel to axis X1 and radial when it is perpendicular to and secant with axis X1. A surface is axial when it is perpendicular to an axial direction and radial when it is perpendicular to a radial direction.

Bearing 1 also includes a gasket 12 which fulfils a sealing function for the first opening 8A. The gasket 12 comprises a metal armature 14 anchored to the outer ring 4, and an elastomer body 16 with a lip 18 that bears slidably against inner ring 2.

Metal sleeve 102 is mounted on inner ring 2 and it is designed to be fastened to a thrust element whose axial position, along axis X1, is controlled by the piston (not shown).

Metal sleeve 102 is mounted in such a way to allow its radial displacement relative to inner ring 2. More precisely, sleeve 102 is provided with tabs 104 that define an outer zone 106 for receiving radial end portion 2C of inner ring 2, with a radial clearance, so that end portion 2C can slide radially in zone 106. This allows the relative position of parts 2 and 102 to be adjusted perpendicularly to the axis X1. This makes it possible to accommodate misalignment between axis X1 and a central axis X102 of metal sleeve 102, when these axes are parallel but do not coincide.

A thrust ring 108 is mounted in tight-fitting manner on inner ring 2. A bellows 110, which is shown partially in chain-dotted lines, is mounted around clutch bearing device 100 in order to isolate it from the outside. An edge of the bellows 110 is received in ring 108.

A metallic flange 20 is disposed between tabs 104 and radial end portion 2C of inner ring 2. This flange 20 includes a flat annular portion 22 which is bent over an inner radial edge 200 of radial end portion 2C. Flange 20 comprises, as well, an external skirt 24. Skirt 24 extends axially in front of an inner radial edge 400 of radial end portion 4C. A first gap G1 is defined between skirt 24 and inner radial edge 400. This gap G1 is measured as the radial distance between these two parts, that is, it is determined perpendicularly to both edge 400 and skirt 24.

A conical ring or spring washer 26, disposed between tabs 104 and flange 20, generates a continuous axial preload between flange 20 and metal sleeve 102 and therefore between inner ring 2 and metal sleeve 102, even during any relative radial self-centring movements therebetween. By means of the radial clearance between radial end portion 2C and metal sleeve 102, at the level of zone 106, metal sleeve 102 is mounted in self-centring manner with respect to conical ring 26.

In addition, metal sleeve 102 is provided with punched out portions 28 enabling it to be hooked in an external peripheral groove in the thrust element, thereby guaranteeing that a thrust force is transmitted effectively between the piston and metal sleeve 102. The geometrical shape of metal sleeve 102 at the level of zone 106 makes it possible to transmit the thrust force to radial end portion 2C, this force being transmitted thereafter, between inner ring 2 and outer ring 4, via balls 6. In practice, inner ring 2 is prevented from rotating around axis X2, whereas outer ring 4 rotates around axis X4, at a speed that depends, in particular, on the engine speed.

Outer ring 4 is equipped with a wear plate 30. The wear plate 30 is in abutment against a diaphragm spring 112 that is shown partially by its tips on figure 1 only, in chain-dotted lines. This diaphragm spring 112 is part of a declutching mechanism, that is known per se and that is not described in any further detail.

The wear plate 30 is equipped with an outer radial end 32. Radial end 32 of wear plate 30 is disposed between outer ring 4 and metal armature 14. Therefore, metal armature 14 holds wear plate 30 on outer ring 4. Wear plate 30 is equipped, as well, with an inner radial end 34 which extends radially, towards central axis X1, beyond inner radial edge 400. Moreover, inner radial end 34 of wear plate 30 extends radially, towards axis X1, beyond skirt 24 of flange 20.

End 34 of wear plate 30 is provided with an axial internal protrusion 36. Protrusion 36 extends at the level of the inner radial edge 300 of wear plate 30. It is provided with an outer radial surface 37. In the assembled configuration of bearing 1, the inner radial edge 400 of outer ring 4 and internal protrusion 36 together define a housing 38. This housing 38 is designed to accommodate a free end 242 of external skirt 24 of flange 20. A distance D1 is defined radially between inner radial edge 400 of outer ring 4 and outer surface 37 of protrusion 36. Distance D1 is the radial width of housing 38. Radial end 34 of wear plate 30 defines an axial floor 40 of housing 38, which is annular.

Floor 40 of housing 38 defines a second gap G2 with external skirt 24. This second gap G2 extends axially, between skirt 24 and floor 40.

Moreover, a third gap G3 is defined radially between outer radial surface 37 of protrusion 36 and external skirt 24 of flange 20. This gap G3 is measured radially between these two parts.

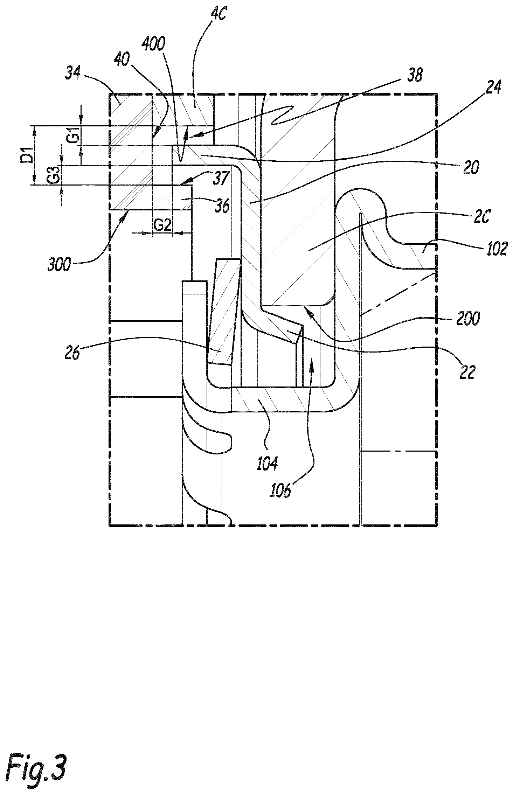

As shown on figure 3, because of the three gaps G1, G2 and G3, when the bearing 1 is in the assembled configuration, a narrow and labyrinth path is established around external skirt 24, within housing 38.

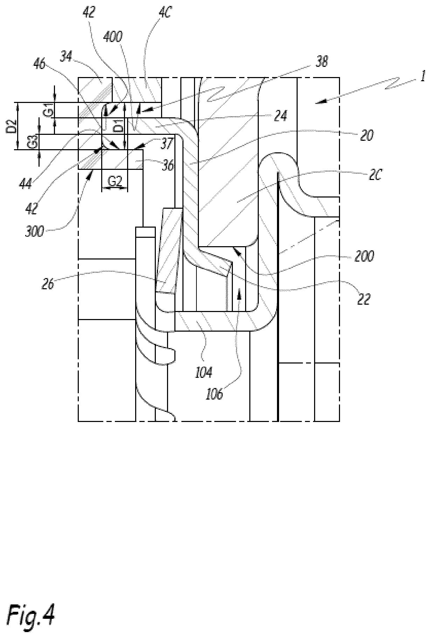

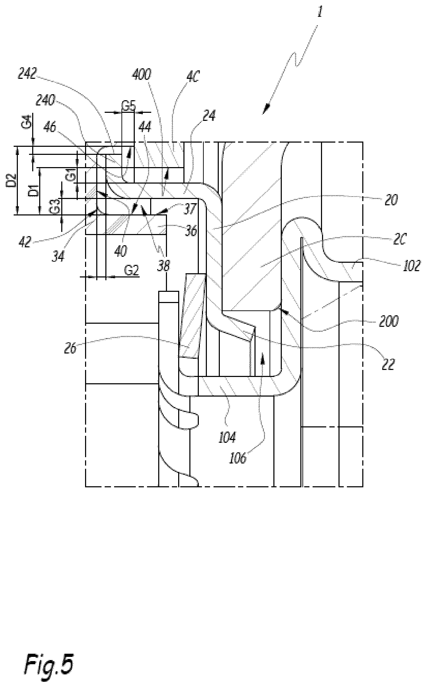

Figures 4 and 5 partially show two bearings 1 according to two alternative embodiments of the invention. The elements of these bearings 1 identical to the ones of the first embodiment bear the same references and they are not described in detail, insofar as the description here-above can be transposed to these elements.

According to the second embodiment of the invention shown on figure 4, wear plate 30 is provided, on its radial end 34, with an annular axial groove 42 which forms a part of housing 38. Groove 42 is limited axially by floor 40 and radially by an inner surface 44 and an outer surface 46 of the wear plate 30.

The transition between the surfaces 44 and 46 of the groove 42 and the floor 40 is performed by bevelled edges.

According to an alternative embodiment of the invention which is not shown in figures, the transition is performed by perpendicular edges.

A radial distance D2 is defined between surfaces 44 and 46. Distance D2 is the radial width of groove 42. Inner surface 44 is aligned axially with radial outer surface 37 of protrusion 36 and outer surface 46 is aligned axially with edge 400 of outer ring 44. In other words, widths D1 and D2 are the same.

According to an alternative embodiment of the invention which is not shown in figures, surfaces 44 and 37 are not aligned and/or surface 46 and 400 are not aligned.

In this second embodiment and in comparison to the first embodiment, the second gap G2 between the skirt 24 and floor 40 is extended, as well as housing 38 is deepened, so that pollution particles are easily trapped therein.

According to a different approach, which is not shown in the figures, the internal skirt 24 can be extended axially so that the gap G2 is reduced and groove 42 accommodates a part of external skirt 24. In this way, the labyrinth path for entering the volume is even more difficult to travel for the pollution particles.

In the third embodiment of the invention, shown in figure 5, groove 42 forms a part of housing 38 and accommodates a part 240 of external skirt 24. Groove 42 is enlarged so that outer surface 46 of groove 42 is not aligned with radial edge 400 of outer ring 4. Inner surface 44 is aligned with outer radial surface 37 of protrusion 36. Therefore, radial width D2 of groove 42 is greater than the radial width D1 between surface 37 and edge 400. External skirt 24 is equipped with an external radial projection 240 which is accommodated in groove 42. The free end 242 of skirt 24 is formed by an outer radial edge of radial projection 240 which faces surface 46. Then, second gap G2 is defined between said projection 240 and floor 40 of groove 42. Moreover, projection 240 defines a fourth gap G4 which extends radially between said projection 240 and surface 46 of wear plate 30. Finally, projection 240 defines a fifth gap G5 which extends axially between said projection 240 and radial end portion 4C of outer ring 4. In comparison to the first two embodiments, the labyrinth path for entering volume 8 is longer and more complicated to travel for pollution particles.

The embodiments and alternative embodiments mentioned here-above can be combined in order to generate new embodiments of the invention.

## Claims

1. A bearing (1) forming a clutching-declutching bearing for a motor vehicle, said bearing defining a central axis (X1) and including an outer ring (4) free to rotate around said central axis, an inner ring (2), rolling elements (6) disposed between the outer and inner rings, a wear plate (30) mounted on the outer ring, the inner ring (2) being equipped with a flange (20) comprising an external skirt (24) and defining a first gap (G1), which extends radially between said external skirt and the outer ring,
said bearing being **characterized in that** the wear plate (30) is provided with an inner radial end (34) which extends radially, towards the central axis (X1), beyond the outer ring (4) and beyond the external skirt (24) of the flange and which defines a second gap (G2), which extends axially between said skirt and said end,
**in that** the end (34) of the wear plate (30) is provided with an internal protrusion (36), a third gap (G3) being defined radially between the internal protrusion (36) of the wear plate (30) and the external skirt (24) of the flange (20),
and **in that** a housing (38) for reception of a free end (242) of the external skirt (24) of the flange (20) is defined between the internal protrusion (36) of the wear plate (30) and an edge (400) of the outer ring (4).

2. A bearing according to claim 1, **characterized in that** the end (34) of the wear plate (30) defines an axial floor (40) of the housing (38).

3. A bearing according to claim 2, **characterized in that** the floor (40) of the housing (38) is provided within a groove (42) made in the inner radial end (34) of the wear plate (30).

4. A bearing according to any one of the preceding claims, **characterized in that** an external radial annular projection (240) is arranged on the external skirt (24) of the flange (20), said projection defining, radially with the wear plate (30), a fourth gap (G4) and, axially with the outer ring (4), a fifth gap (G5).

5. A bearing according to any one of the preceding claim, **characterized in that** the inner radial end (34) of the wear plate (30) has a groove (42) which forms a part of the housing (38) and accommodates a part (240, 242) of the external skirt.

6. A bearing according to claims 4 and 5, **characterized in that** the external radial annular projection (240) is accommodated in the groove (42).

7. A bearing according to one of claims 5 and 6, **characterized in that** the groove (42) has a radial width (D2) equal to a radial width (D1) of the remaining part of the housing (38).

8. A bearing according to one of claims 5 and 6, **characterized in that** the groove (42) has a radial width (D2) greater than a radial width (D1) of the remaining part of the housing (38).

9. A bearing according to any one of the preceding claim, **characterized in that** the inner ring (2) has a null or reduced angular clearance motion around an axis perpendicular to the central axis.

10. A clutch bearing device (100) comprising a metal sleeve (102) for reception of a control device and a bearing (1) according to any preceding claim, said bearing being capable of acting on a diaphragm spring (112) of a clutch mechanism.

11. A motor vehicle equipped with a clutch bearing device (100) according to claim 10.

## Patentansprüche

1. Lager (1), das ein Einkuppel-/Auskuppel-Lager für ein Kraftfahrzeug bildet, wobei das Lager eine Mittelachse (X1) definiert und einen Außenring (4), der sich frei um die Mittelachse dreht, einen Innenring (2), Wälzkörper (6), die zwischen dem Außenring und dem Innenring angeordnet sind, und eine Verschleißplatte (30), die an dem Außenring befestigt ist, umfasst, wobei der Innenring (2) mit einem Flansch (20) versehen ist, der eine äußere Einfassung (24) umfasst und einen ersten Spalt (G1) definiert, der sich radial zwischen der äußeren Einfassung und dem Außenring erstreckt,
wobei das Lager **dadurch gekennzeichnet ist, dass** die Verschleißplatte (30) mit einem inneren radialen Ende (34) versehen ist, das sich radial zu der Mittelachse (X1) über den Außenring (4) und die äußere Einfassung (24) des Flansches hinaus erstreckt und das einen zweiten Spalt (G2) definiert, der sich axial zwischen der Einfassung und dem Ende erstreckt,
**dass** das Ende (34) der Verschleißplatte (30) mit einem inneren Vorsprung (36) versehen ist, wobei ein dritter Spalt (G3) radial zwischen dem inneren Vorsprung (36) der Verschleißplatte (30) und der äußeren Einfassung (24) des Flansches (20) definiert ist,
und **dass** ein Gehäuse (38) zum Aufnehmen eines freien Endes (242) der äußeren Einfassung (24) des Flansches (20) zwischen dem inneren Vorsprung (36) der Verschleißplatte (30) und einem Rand (400) des Außenrings (4) definiert ist.

2. Lager nach Anspruch 1, **dadurch gekennzeichnet, dass** das Ende (34) der Verschleißplatte (30) einen axialen Boden (40) des Gehäuses (38) definiert.

3. Lager nach Anspruch 2, **dadurch gekennzeichnet, dass** der Boden (40) des Gehäuses (38) mit einer Nut (42) versehen ist, die in dem inneren radialen Ende (34) der Verschleißplatte (30) hergestellt ist.

4. Lager nach einem der vorhergehenden Ansprüche, **dadurch gekennzeichnet, dass** ein äußerer radialer ringförmiger Vorsprung (240) an der äußeren Einfassung (24) des Flansches (20) angeordnet ist, wobei der Vorsprung radial mit der Verschleißplatte (30) einen vierten Spalt (G4) und axial mit dem Außenring (4) einen fünften Spalt (G5) definiert.

5. Lager nach einem der vorhergehenden Ansprüche, **dadurch gekennzeichnet, dass** das innere radiale Ende (34) der Verschleißplatte (30) eine Nut (42) aufweist, die einen Teil des Gehäuses (38) bildet und in der ein Teil (240, 242) der äußeren Einfassung aufgenommen ist.

6. Lager nach den Ansprüchen 4 und 5, **dadurch gekennzeichnet, dass** der äußere radiale ringförmige Vorsprung (240) in der Nut (42) aufgenommen ist.

7. Lager nach einem der Ansprüche 5 und 6, **dadurch gekennzeichnet, dass** die Nut (42) eine radiale Breite (D2) aufweist, die gleich einer radialen Breite (D1) des restlichen Teils des Gehäuses (38) ist.

8. Lager nach einem der Ansprüche 5 und 6, **dadurch gekennzeichnet, dass** die Nut (42) eine radiale Breite (D2) aufweist, die größer als eine radiale Breite (D1) des restlichen Teils des Gehäuses (38) ist.

9. Lager nach einem der vorhergehenden Ansprüche, **dadurch gekennzeichnet, dass** der Innenring (2) eine Null entsprechende oder reduzierte Winkelspielbewegung um eine Achse aufweist, die rechtwinklig zu der Mittelachse verläuft.

10. Kupplungslagervorrichtung (100), die eine Metallhülse (102) zum Aufnehmen einer Steuervorrichtung und eines Lagers (1) nach einem der vorhergehenden Ansprüche umfasst, wobei das Lager in der Lage ist, auf eine Membranfeder (112) eines Kupplungsmechanismus einzuwirken.

11. Kraftfahrzeug, das mit einer Kupplungslagervorrichtung (100) nach Anspruch 10 ausgestattet ist.

## Revendications

1. Butée (1) formant une butée d'embrayage-débrayage pour un véhicule automobile, ladite butée définissant un axe central (X1) et comportant une bague extérieure (4) pouvant tourner autour dudit axe central, une bague intérieure (2), des éléments roulants (6) disposés entre les bagues extérieure et intérieure, une plaque d'usure (30) montée sur la bague extérieure, la bague intérieure (2) étant équipée d'une bride (20) comprenant une jupe extérieure (24) et définissant un premier jeu (G1) qui s'étend radialement entre ladite jupe extérieure et la bague extérieure,
ladite butée étant **caractérisée en ce que** la plaque d'usure (30) est munie d'une extrémité radiale intérieure (34) qui s'étend radialement, vers l'axe central (X1), au-delà de la bague extérieure (4) et au-delà de la jupe extérieure (24) de la bride et qui définit un deuxième jeu (G2), qui s'étend axialement entre ladite jupe et ladite extrémité,
**en ce que** l'extrémité (34) de la plaque d'usure (30) est munie d'une saillie intérieure (36), un troisième jeu (G3) étant définie radialement entre la saillie intérieure (36) de la plaque d'usure (30) et la jupe extérieure (24) de la bride (20),
et **en ce qu'**un boîtier (38) destiné à recevoir une extrémité libre (242) de la jupe extérieure (24) de la bride (20) est défini entre la saillie intérieure (36) de la plaque d'usure (30) et un bord (400) de la bague extérieure (4) .

2. Butée selon la revendication 1, **caractérisée en ce que** l'extrémité (34) de la plaque d'usure (30) définit un fond axial (40) du boîtier (38).

3. Butée selon la revendication 2, **caractérisée en ce que** le fond (40) du boîtier (38) est prévu dans une rainure (42) réalisée dans l'extrémité radiale intérieure (34) de la plaque d'usure (30).

4. Butée selon l'une quelconque des revendications précédentes, **caractérisée en ce qu'**une saillie annulaire radiale extérieure (240) est disposée sur la jupe extérieure (24) de la bride (20), ladite saillie définissant, radialement avec la plaque d'usure (30), un quatrième jeu (G4) et, axialement avec la bague extérieure (4), un cinquième jeu (G5).

5. Butée selon l'une quelconque des revendications précédentes, **caractérisée en ce que** l'extrémité radiale intérieure (34) de la plaque d'usure (30) présente une rainure (42) qui forme une partie du boîtier (38) et reçoit une partie (240, 242) de la jupe extérieure.

6. Butée selon les revendications 4 et 5, **caractérisée en ce que** la saillie annulaire radiale extérieure (240) est logée dans la rainure (42).

7. Butée selon l'une des revendications 5 et 6, **caractérisée en ce que** la rainure (42) présente une largeur radiale (D2) égale à une largeur radiale (D1) de la partie restante du boîtier (38).

8. Butée selon l'une des revendications 5 et 6, **caractérisée en ce que** la rainure (42) présente une largeur radiale (D2) supérieure à une largeur radiale (D1) de la partie restante du boîtier (38).

9. Butée selon l'une quelconque des revendications précédentes, **caractérisée en ce que** la bague intérieure (2) présente un mouvement de jeu angulaire nul ou réduit autour d'un axe perpendiculaire à l'axe central.

10. Dispositif de butée d'embrayage (100) comprenant un manchon métallique (102) pour recevoir un dispositif de commande et une butée (1) selon l'une quelconque des revendications précédentes, ladite butée étant capable d'agir sur un ressort à diaphragme (112) d'un mécanisme d'embrayage.

11. Véhicule automobile équipé d'un dispositif de butée d'embrayage (100) selon la revendication 10.
